# EUROPEAN PATENT APPLICATION

(11) **EP 4 279 320 A1**
(43) Date of publication of application: **22.11.2023**
(21) Application number: 22173850.3
(22) Date of filing: 17.05.2022
(51) Int. Cl.: B60L 8/00, B60K 16/00

(54) **CONTROLLING POWER CONSUMPTION FOR A VEHICLE HAVING PHOTOVOLTAICS AT A VEHICLE BODY**

(71) Applicant: Sono Motors GmbH, 80935 München (DE)
(72) Inventor: BAUDRIT, Mathieu, 80636 Munich (DE)
(74) Representative: Qip Patentanwälte Dr. Kuehn & Partner mbB

(57) **Abstract**

The invention relates to a technique for controlling power consumption for a vehicle (102) having photovoltaics, PV (118), at a vehicle body. A method comprises accepting, from an imaging device (124), imaging data representing information on an environment of the vehicle (102); calculating a PV yield estimate taking into account the imaging data; and controlling a power consumption related to the vehicle (102) taking into account the calculated PV yield estimate.

## Description

### FIELD OF THE INVENTION

The present disclosure relates to a method for controlling power consumption at a vehicle, and in particular to a method for controlling power consumption for a vehicle having photovoltaics, PV, at a vehicle body. The present disclosure further relates to a computer program for implementing said method, a computer readable medium storing said computer program, and to a power consumption control module for a vehicle.

### TECHNICAL BACKGROUND

Electric vehicles are known which are cars, automobiles, or any kind of vehicle which move or are mobile based on one or more axles or wheels being driven by one or more electric motors. The motor or motors consume energy or power provided by one or more batteries. Hybrid vehicles which use additionally a combustion engine for mobility are also understood herein as electric vehicles.

Such vehicles, more precisely the batteries thereof, are usually charged or loaded with power or energy by means of a connection to a power grid. As another option for charging or loading the batteries, vehicles are known that have photovoltaics arranged therewith, specifically at a vehicle body. The photovoltaics may comprise solar cells for converting incident light into electrical energy and said energy may be provided to the battery or batteries of the electrically powered vehicle.

A vehicle may also provide energy to the grid and/or to consumers otherwise electrically connected to the vehicle. A power management or energy management, more specifically a power provisioning and/or consumption management for such a vehicle has to manage all these different issues and has to manage power consumption taking into account a charging state of the vehicle, a demand for energy for future drives, and many further conditions.

Photovoltaic yield estimators are known which calculate a photovoltaic yield or PV yield for PV arrangements, for example for stationary arrangements such as a solar farm or a solar arrangement at a building. Any such calculations are generally predictions or estimates of a yield or gain per time, with given parameters such as an (average) amount of sunlight incident on the arrangement, a conversion efficiency of the solar cells, etc.

Use of cameras for automobiles is known for various purposes, for example, cameras may be provisioned for assisting the driver for parking or other manoeuvring. As another example, dashcams may record views through the vehicle's windows for video monitoring of accidents or other events in the environment of the vehicle.

### SUMMARY

There is a need for improved schemes of power consumption control for vehicles, in particular for vehicles having photovoltaics at a vehicle body.

Such need is satisfied by the subject-matter of the independent claims. Advantageous embodiments are defined in the dependent claims and described in the following specification and illustrated in the accompanying figures.

According to a first aspect of the present disclosure, a method for controlling power consumption for a vehicle having photovoltaics, PV, at a vehicle body is proposed. The method comprises accepting, from an imaging device, imaging data representing information on an environment of the vehicle; calculating a PV yield estimate taking into account the imaging data; and controlling a power consumption related to the vehicle taking into account the calculated PV yield estimate.

According to various embodiments, the imaging device may comprise at least one camera of the vehicle, such as a dashcam or a camera of a driving or parking assistance system of the vehicle. Additionally or alternatively, the imaging device may comprise at least one camera of a personal mobile device of a passenger of the vehicle, such as a mobile device, mobile phone, smartphone, tablet or other portable device of the driver or other passenger of the vehicle. Additionally or alternatively, the imaging device may comprise at least one camera nearby the vehicle such as a stationary camera of a parking facility.

According to embodiments, accepting the imaging data comprises wireless transfer of the imaging data from the personal mobile device to the vehicle. According to one embodiment, the imaging device may comprise one or both of a rear camera or a front camera of a smartphone. For example, the smartphone may be temporarily accommodated in a holder of the vehicle. For example, the smartphone may be communicatively connected to the vehicle by means of Bluetooth, WiFi, WLAN, and/or other short-range communication system.

According to embodiments, the method further comprises accepting a parking intention indication representing an information that the vehicle is going to be parked, and in response to accepting the parking intention indication, an imaging in the imaging device is automatically initiated to receive the imaging data. According to some embodiments, the driver may indicate a parking intention by voice, touch and/or type input. However, any input which is interpreted by an according assistance function as a parking intention can trigger the automatic imaging, such as location information which indicates that a parking facility is approached, a signal provided by the parking facility, etc.

According to some embodiments, imaging data from the dashcam or a mobile or portable device accommodated in a holder of the vehicle may initiate the process including the call of the PV yield estimator. For example, a parking facility, known parking place, a parking sign, etc. can be detected by an image recognition system in the imaging data of the dashcam or accommodated device. In this case, said imaging data or portions thereof may even itself be used as input for the PV yield estimator, and further imaging data may or may not be required.

According to embodiments, the driver or other passenger may trigger the process by parking, locking or leaving the vehicle, and this may, for example, trigger one or more dashcams of the vehicle to provide an image or images of the current environment of the vehicle.

According to embodiments, calculating the PV yield estimate can comprise calculating, based on the imaging data, an amount of light energy impinging on the vehicle for a given park duration. According to embodiments, the light energy may comprise solar energy received from the sun, but may additionally or alternatively comprise energy received from other light sources, such as any kind of light sources or illuminants as may be used, for example, for illuminating parking facilities, streets, etc. According to embodiments, the light energy may comprise direct radiation, such as solar radiation directly incident from the sun onto the vehicle, more specifically all or parts of the PV integration thereof. Additionally or alternatively, the light energy may comprise indirect radiation such as reflected radiation, for example sunlight reflected from surfaces such as white or light buildings, billboards, reflective or mirroring surfaces such as glass panels, windows, building or housing fronts, rivers, lakes, etc., but also from nearby parked vehicles such as buses, lorries, etc.

According to embodiments, calculating the PV yield estimate can comprise calculating, based on the imaging data, a shadowing of the vehicle. Such shadowing may be caused by any kind of media or objects capable of absorbing or obscuring direct or reflected light, such as clouds, fog, any kind of humidity in the air, dust, air pollution, etc. According to some embodiments, a shadowing of the vehicle may be caused by objects local to and/or nearby to the vehicle, such as one or more buildings, a bridge, a tree or trees, a forest, a dam, a hill, a mountain range, etc. Any such object may be identified within the imaging data insofar as being able to shadow the vehicle either currently and/or at a future time, for example during an intended parking duration of the vehicle. As an example, images may be analyzed explicitly or implicitly for trees with leaves as being able to cast a shadow, while the same trees without leaves may have less shadowing capacity.

According to some embodiments, based on the imaging data, a horizon surrounding the vehicle is calculated. According to one approach, the horizon is calculated based on one or more objects identified in the imaging data, for example objects which are identified to be potential shadowing objects, e.g., static objects such as trees in contrast to (potentially) moving objects such as vehicles. According to another approach, one or more positions or one or more areas in the imaging data can be identified as "sky" or "heaven", i.e., as areas from which (direct) sunlight may principally be incident onto all or parts of the PV integration of the vehicle, while other positions or areas represented by the imaging data are not identified as "sky" and/or are identified as "other than sky", "obscuring", "ground", etc., i.e., as potentially obscuring objects or ground. According to a specific embodiment, a horizon or horizon line may be calculated as a separation line or lines between positions or areas identified as "sky" and those not identified as such.

The horizon line may not surround the vehicle entirely, but need to be defined only for portions of the imaging data including positions which will be occupied by the sun during a parking duration. Additionally or alternatively, multiple horizon lines may be identified, for example, in case of sunlight incident onto the vehicle from above and below a bridge at different positions of the sun.

According to various embodiments, the method can further comprise accepting a park duration information representing a prospective park duration of the vehicle. The park duration information is taken into account when calculating the PV yield estimate.

According to various embodiments, calculating the PV yield estimate can be based on a shape of the vehicle. As an illustrative example, a bus or bus trailer may be assumed as a cuboid where roof and side walls may be covered with photovoltaics to a certain extent. More complex geometries can be represented, and can be represented directly in digital form, by equations, tables, combinations thereof, etc.

According to embodiments, calculating the PV yield estimate can be based on a performance of the PV integration or solar cell integration of the vehicle. Such performance may be related to a type or types of the solar cells, their specific kind of integration or embedment into the vehicle body, etc. The performance of solar cell integration may also be considered dependent on the light incident on or impinging thereon. According to some embodiments, solar radiation may be considered dependent on a geographical location, height of the sun on the sky, e.g., dependent on the time of the year, the time of the day, etc.

According to embodiments, a given performance of solar cell integration based on full sunlight may be considered less in conditions of weakened sunlight, such as for example in case of cloudy sky, overcast sky, fog, low stratus, general degree of atmospheric humidity, rain, snow, dusty conditions, air pollution degree, etc.

According to embodiments, the method further comprises accepting positioning information from the vehicle and/or the personal mobile device on at least one of a localization of the vehicle and an orientation of the vehicle, and calculating the PV yield estimate based on said positioning information. According to various embodiments, such information may be provided by, e.g., requested and received from, a location sensor such as a global positioning system, GPS, sensor and/or a compass function associated with the vehicle and/or a mobile device such as a smartphone of the driver. Additionally or alternatively, information on a location of, e.g., a parking facility can be provided by said parking facility.

According to embodiments, the method further comprises accepting weather data related to a location of the vehicle and calculating the PV yield estimate based on said weather data. Such weather data may be real-time weather data, such as or including weather data which can be measured by sensory equipment at the vehicle itself, for example, light sensors. According to embodiments, the photovoltaics at the vehicle or parts or portions thereof may serve for such sensing.

Additionally or alternatively, the weather data may comprise forecast weather data. According to embodiments, a weather forecast database may be accessed to retrieve real-time and/or forecast weather data. Such accessing may comprise a parking assistant, PV yield estimator, other component of the vehicle and/or a personal mobile device, e.g., an app executing thereon, of a passenger of the vehicle accessing a remote database providing the weather forecast data.

According to embodiments, the method further comprises controlling, based on at least one of the calculated PV yield estimate, a provisioning of electrical energy or power related to the vehicle. According to various embodiments, the provisioning of electrical energy can comprise a charging and/or a discharging of the vehicle, wherein the charging can comprise a charging of a battery of the vehicle from a power source such as via a local electrical connection and/or via or from a power grid, while the discharging of the vehicle can comprise a discharging of a battery of the vehicle to a power sink or consumer via a local electrical connection and/or via or to a power grid, etc. "Discharging" is also referred to as "feeding" or "injecting" power or energy to the consumer, grid, etc. It is noted that the term "discharging" is intended herein to include a feeding or injection of energy from a battery of the vehicle and/or from a solar integration of the vehicle to an external consumer, grid, etc., and said term may be used for sake of conciseness although the battery of the vehicle may not be discharged if the fed or injected energy is purely provided by the PV integration.

According to some embodiments, the controlling of the provisioning of power or "power provisioning control" can comprise a control of a timing of the charging and/or discharging of the vehicle. For example, the provisioning of electrical energy can comprise a charging regime including a charging for one or more time spans and/or a discharging for one or more time spans.

According to embodiments, at least one of a charging energy or a charging regime related to a provisioning of energy from a charging station to the vehicle can be determined based on the PV yield estimate. The charging regime may specify a charging of the vehicle by the charging station over all or a part or parts of a prospective parking duration, where the determination may take into account the PV yield estimated to be provided by the solar integration of the vehicle at an indicated park position, and depending on any shadowing thereof by nearby buildings, trees, other parked vehicles, etc.

According to embodiments, the method can further comprise accepting an energy demand indication, and controlling the provisioning of power based on the accepted energy demand indication. The provisioning of power can comprise a reception of power from the charging station and/or a provisioning of power to a consumer, such as via the charging station. The energy demand indication may indicate an energy demand of the vehicle after a prospective park duration, such as for further travel, the next drive, etc., which may be input or acknowledged by the driver, determined by a system of the vehicle based on historical data, etc.

According to embodiments, in case an energy level or load indicating a level or load of energy or power available in a battery or batteries of the vehicle currently and/or during or at the end of the prospective park duration (based on the estimated PV yield at the assumed park position) exceeds the indicated energy demand, energy may be provided to another consumer or consumers, which may for example include feeding energy into a grid, where any such provisioning may be accomplished during portions or all of the prospective parking duration.

According to embodiments, the method can further comprise providing a park position indication of at least one of various park positions based on a comparison of PV yield estimates calculated for each of the various park positions. According to some embodiments, the park position indication can comprise an indication of a park position, which can include a direction of driving towards the park position, an indication of the park position and/or travel path thereto on a graphical user interface, GUI, such as on a map of a parking lot, or combinations thereof. The park position indication can additionally or alternatively comprise an orientation or orientation range of the vehicle, such as, for example, an indication of how to park relative to a celestial direction, an indication to park in a forward or rearward direction, etc.

According to these and/or other embodiments, the park position indication can be provided to an autonomous system which then autonomously parks the vehicle in the indicated position and/or orientation.

According to embodiments, the park position indication indicates a park position with a power provisioning facility such as a general charging station, a charging-only station, a station for charging and discharging, etc. based on the PV yield estimate for said park position. For example, in case charging from the grid is not required according to the PV yield estimate, a parking place without charging station may be indicated. According to some embodiments, the power provisioning facility may comprise a connector for connecting to a charging facility and/or a discharging facility. According to embodiments, the connector may provide a connection to a power grid to receive power therefrom or supply power thereto.

According to embodiments, a discharging such as a feeding or injection of energy into the grid may comprise controlling the injection according to one or more electricity tariffs. According to one embodiment, energy may be offered by the vehicle particularly at times when the prices are high.

Generally, embodiments of the methods proposed herein may be partly or fully computer-implemented. For example, any one or more steps may be executed in or by a controller, processing unit such as a central processing unit, CPU, etc., or one or more of such components.

According to a further aspect of the present disclosure, a computer program (product) is proposed which comprises program code portions for at least one of performing and controlling one or more of the methods described herein when the computer program (product) is executed on one or more computing devices.

According to another aspect of the present disclosure, the computer program product may be stored on a computer readable medium, such as a permanent or re-writeable memory within or associated with a computing device, such as flash memory, ROM, PROM, EPROM, or a removable CD-ROM, DVD or USB-stick. Alternatively, the computer readable medium may be a stationary device such as another computer or server, such computer or server possibly being part of a data cloud, wherein the computer program may be provided for download from such computer or server, for example, via a data network such as the Internet and/or a LAN or a communication line such as a telephone line or wireless link.

According to a still further aspect of the present disclosure, a power consumption control module is proposed for a vehicle having photovoltaics, PV, at a vehicle body. The power consumption control module comprises a component configured for accepting, from an imaging device, imaging data representing information on an environment of the vehicle; a PV yield estimator configured for calculating a PV yield estimate taking into account the imaging data; and a component configured for controlling a power consumption related to the vehicle taking into account the calculated PV yield estimate. According to some embodiments, the PV yield estimator can be remote from the other components, such that the power consumption control module comprises a component, such as an input/out component, an interface component, such as an application programmable interface, API, component, for communication with the PV yield estimator.

### BRIEF DESCRIPTION OF THE DRAWINGS

Further exemplary embodiments will be described in detail with reference to the accompanying drawings:
- Fig. 1: schematically illustrates an exemplary parking scenario for a vehicle according to an embodiment of the present disclosure;
- Fig. 2: schematically illustrates an embodiment of a power consumption control module of the vehicle of Fig. 1;
- Fig. 3: is a flow diagram illustrating an operation of the power consumption control module of Fig. 2;
- Fig. 4A: schematically illustrates a horizon as detected by the control module of Fig. 2.
- Fig. 4B: schematically illustrates a power provisioning during a parking time of the vehicle in the parking scenario of Fig. 1.

### DESCRIPTION OF PREFERRED EMBODIMENTS

It shall be noted that features and advantages of various embodiments may be described herein partly with respect to a method and partly with respect to a module or component. One skilled in the art readily recognizes that a feature or features may suitably be transferred from one embodiment to other and features may be modified, adapted, combined and/or replaced, etc. in order to arrive at further embodiments.

If not explicitly stated otherwise, the figures are schematic and not to scale. Reference signs in the claims should not be construed as limiting the scope of the claims. Same reference signs refer to same or similar features.

It should be noted that any of the terms "comprising" or "including" as used herein does not exclude other elements or steps. Use of "a" or "an" does not exclude a plurality.

The term "vehicle" as used herein may refer to one or more vehicles such as passenger cars, taxis, vans, busses, mobile homes or camping cars, but also freight vehicles or lorries, etc., and may include manned vehicles but also unmanned vehicles. Vehicles may even be considered trains such as trams, ships, or airplanes.

Vehicles as considered herein may be controlled, e.g., driven by humans, where the driver may be assisted by driving assistants and/or parking assistants. Other vehicles may be driven or controlled fully or in part autonomously, i.e. by an autonomous driving control system.

It shall be noted that "parking" of a vehicle may include any kind of parking, placing, or stopping of the vehicle for some time span, i.e. the parking duration, which may include situations on a parking lot such as in any kind of parking area including a car park, bus park, parking areas for public vehicles such as garbage trucks or trams, or for a vehicle fleet of a company, but also a parking deck of a car park building such as being not or partly or fully covered by roof but with openings in or open side walls where sunlight can enter and impinge on parked vehicles.

A photovoltaic arrangement, sometimes referred to herein as "photovoltaics" for short, may comprise only one solar cell, but may typically comprise a multiplicity of photovoltaic cells, wherein the or each photovoltaic cell is configured for converting incident or impinging light into electrical energy. One or more photovoltaic cells may be arranged in one or more photovoltaic panels. In the following, the term "photovoltaic/s" may be abbreviated by "PV". PV cells may also be referred to as solar cells.

Such photovoltaics may also be arranged at a vehicle, for example a vehicle body, wherein "arranged at" may include that the photovoltaics is arranged on, embedded within, and/or forms part of the vehicle body, e.g., the vehicle roof and/or side parts. However, photovoltaics may also be included in advertising roof signs for taxis, etc. Photovoltaics may also be arranged at a trailer of a motored vehicle, such as at bus trailers.

Such PV arrangements may also be referred to as PV integration or solar integration. For example, electrically driven vehicles including PV integration may be referred to as solar electric vehicle (SEV) or vehicle with solar integration. For example, a significant portion of an overall vehicle body may be covered with solar cells (or having those embedded).

The electrical energy generated by the photovoltaics may be used for supplying power to one or more consumers, for example at the vehicle itself, more specifically a motor or motors thereof, and/or to consumers separate or remote from the vehicle, and the electrical energy may be provided via one or more power cables and/or to or via a grid or grids, such as a local grid at the parking facility connected to a public grid, power network, national grid, etc.

More specifically, electrical energy generated by the photovoltaics may be stored in one or more electrical storage components such as one or more batteries, battery packs, etc. onboard the vehicle, or outside of or remote from the vehicle, such as being fed from the vehicle via a grid to any kind of consumer, including electrically driven facilities and storage facilities, which may include electrical storage components but also other storage facilities such as a facility to produce green hydrogen, a gravitational storage component such as a pumped storage hydroelectricity, etc.

A photovoltaic yield or PV yield may generally be calculated or estimated for a given PV arrangement or solar cell arrangement, for example for a stationary arrangement such as a solar farm or an arrangement on a building or buildings. Such calculation may include the performance of the PV arrangement, which amongst others depends on the light impinging thereon, and this may also include the geographical latitude of the given location, specifics of the arrangement such as total area, inclination angles of all or parts of the arrangement, etc.

While the terms "imaging device" and "camera" are used synonymously herein for sake of conciseness, it is to be noted that these terms are understood to cover any devices which can be used to detect structures in an environment of or around the vehicle, where relevant of these structures may be able to obscure a significant fraction of sunlight, such as buildings or trees. Such devices may be cameras operative in optical, infrared and/or ultraviolet wavelengths. It is not required that such cameras provide focused or "sharp" images but cameras can be contemplated useful which have, e.g., fixed focal points or distances or optics as long as it is possible to detect obscuring structures in the environment. Sensing equipment such as radar or lidar ("light detection and ranging") and even ultrasonic sensing may also be considered as "imaging devices" as long as being able to detect structures in the environment such as, e.g., neighbouring parking cars, buses, trucks, etc.

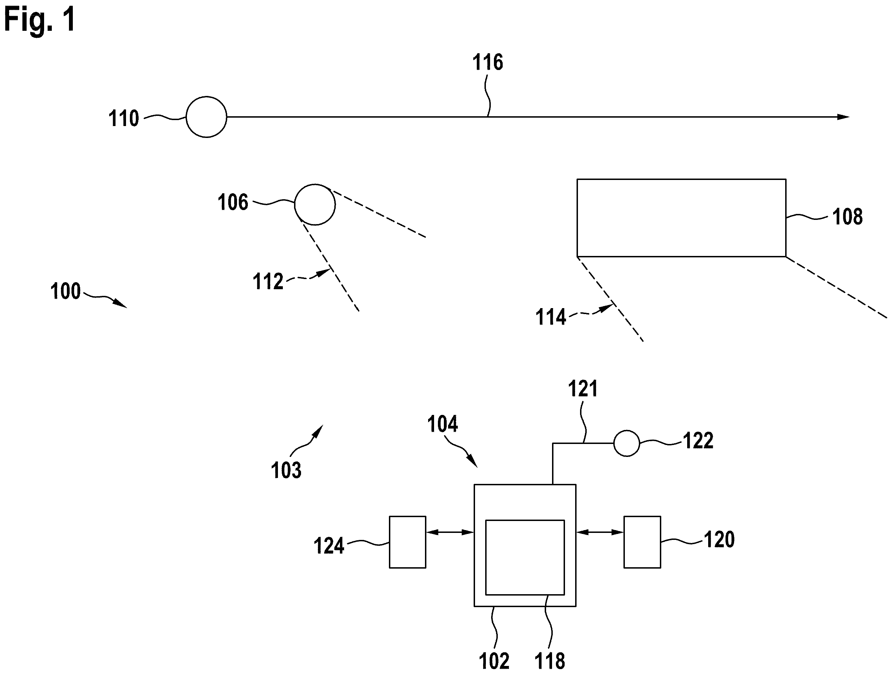

Fig. 1 schematically illustrates an exemplary situation 100 wherein a vehicle 102 approaches a parking lot 103 offering parking places to park the vehicle 102, from which only a single parking place 104 is illustrated for ease of understanding, and it is understood that parking place 104 is an outdoor parking place.

Objects within or adjacent the parking lot 103 include an object 106 which may be a tree, and an object 108 which may be a building. At a specific daytime, with the sun indicated at a position 110, the object 106 casts a shadow, which is indicated by dashed lines 112, onto at least a portion of parking lot 103. Object 108 accordingly casts a shadow as indicated by dashed lines 114.

When the sun moves over the sky, as indicated by arrow 116, shadows cast by objects 106, 108 accordingly move and the vehicle 102 when parked on parking place 104 may accordingly be illuminated or shaded.

Vehicle 102 is equipped with a photovoltaics, PV, arrangement 118 at its vehicle body, where the PV arrangement 118 enables charging vehicle 102. A PV yield of arrangement 118 for the parking time of vehicle 102 at parking place 104 may be estimated and a power consumption or power provisioning for vehicle 102 may accordingly controlled by control module 120 as described in more detail in the following. Module 120 may be integrated within vehicle 102, such as in an infotainment system thereof, may be provided remote and accessed by vehicle 102 on demand, or combinations thereof such that some components are locally available within the vehicle and others, such as the PV yield estimator, for example, may be accessed remotely.

A connector 121 at parking place 104 provides an electrical connection enabling that vehicle 102 electrically connects to a power grid 122 to receive power therefrom for charging vehicle 102, or supply power from a battery of vehicle 102 and/or the PV integration 118 to one or more consumers via the grid 122.

A camera 124 is associated with vehicle 102 and is exemplarily considered a camera of a smartphone of a driver of vehicle 102 in the following.

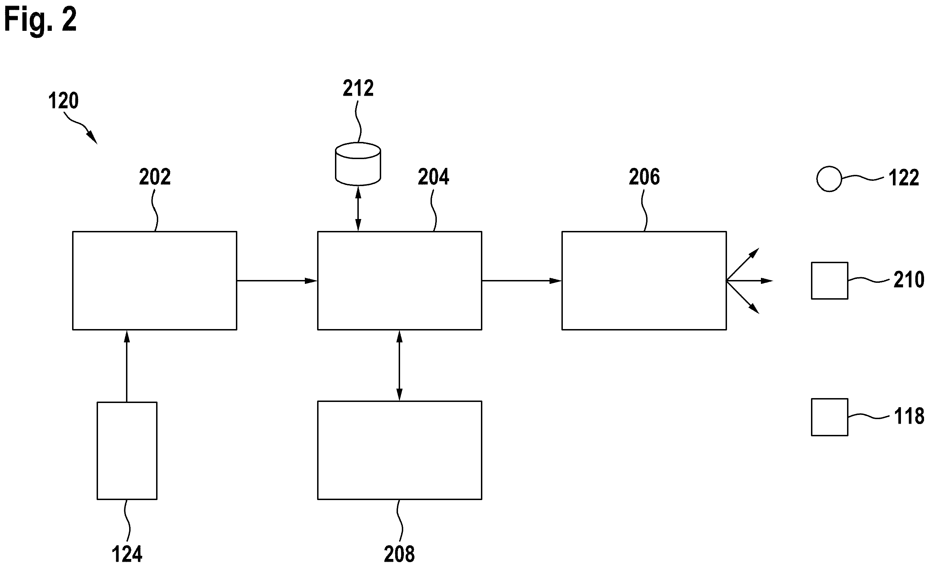

Fig. 2 is a functional block diagram schematically illustrating the power consumption control module 120 of Fig. 1 in more detail as comprising an input component 202, a frontend component 204, and a control or output component 206. The input component 202 is specifically illustrated as being configured to receive imaging data from camera 124. Frontend component 204 serves as frontend component for PV yield estimator 208, wherein component 204 may be implemented as an input/output interface or application programming interface, API, for PV yield estimator 208. The PV yield estimator 208 may be integrated locally within control module 120 or may be an external component, i.e., the functionality thereof being implemented remote and being accessed by frontend component 204 when required. Accordingly, frontend component may be integrated within input component 202 and/or PV yield estimator 208, for example if the PV yield estimator 208 is locally implemented.

Control component 206 may include or act on control logic to control any kind of electrical connections between power grid 122, a battery 210 of vehicle 102, and the PV integration 118 of vehicle 102. Specifically, control component 206 may control a "charging" of or supply of power to battery 210 from grid 122 and/or the PV integration 118, as well as a "discharging" or supply of power or energy from the PV integration 118 to battery 210 and/or the power grid 122.

All or parts of control module 120 may be implemented as firmware and/or software operating on processor logic built-into vehicle 102.

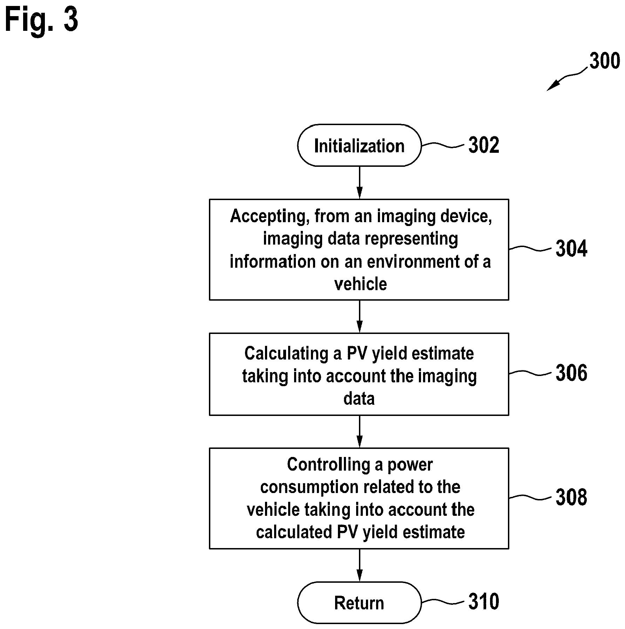

Fig. 3 is a flow diagram illustrating an operation 300 of the power consumption control module 120. In step 302, the control module 120 is in an initial state, such as being initiated by a main control unit of vehicle 102.

In step 304, input component 202 accepts imaging data from camera 124. Such imaging data may be requested by control module 120 or may be pushed from camera 124 and may then even trigger the step 302 of the control module 120 becoming operative. Additionally or alternatively, the control module 120 may be triggered by events related to vehicle 102 approaching parking lot 103 or parking place 104, such as reception of according input from the driver, reception of location data indicative of the parking lot 103, establishment of an electrical connection to grid 122 by connector 121, etc.

Turning to a specific example, input component 202 (or frontend component 204) may request imaging data from a camera or cameras associated with the vehicle, such as a dashcam, or associated with a passenger of the vehicle, such as camera 124 of the smartphone of the driver. For example, the driver's smartphone may be placed in a fixture in the vehicle and being able to image an area in front of the vehicle and can provide such image via a short range communication connection with the vehicle. According to other examples, parking lot 103 may provide imaging data and/or other information relevant for the PV yield estimator to take into account for determining local shading conditions. The PV yield estimator 208 (or frontend 204) may use the imaging data to calculate local shading conditions for the parking place 103, multiple parking places, or each specific parking such as parking place 104. The PV yield estimator 208 may then calculate the amount of light impinging on the PV integration 118 of vehicle 102 based on said local shading conditions.

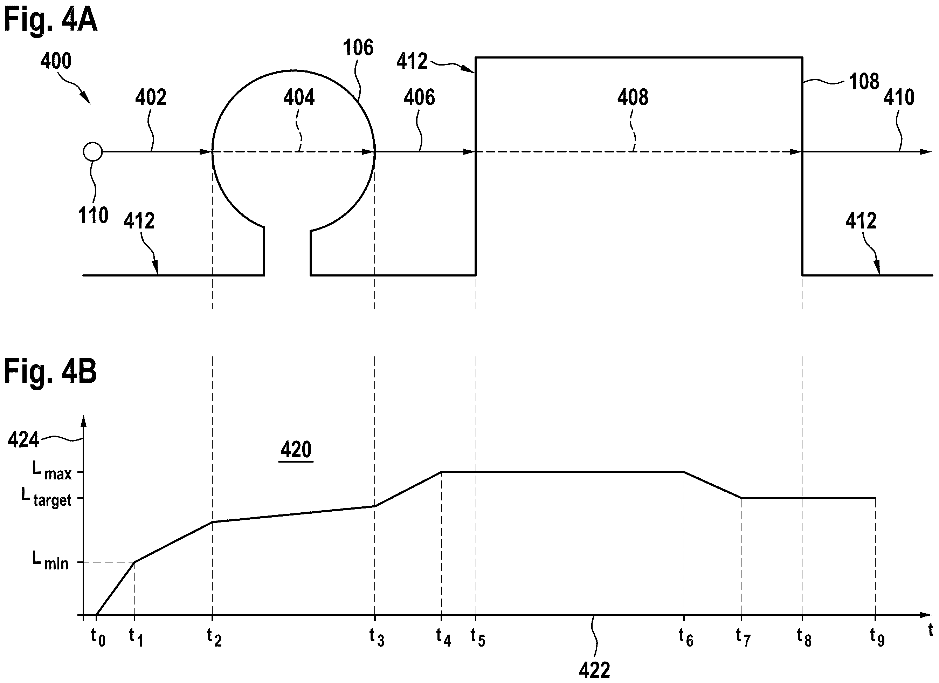

Fig. 4A exemplarily illustrates an image 400 as may be received from camera 124. The image 400 represents an environment of vehicle 102 at parking place 104, where the image 400 may have been taken by the smartphone of the driver when accommodated in a holder of vehicle 102, such that image 400 represents the environment as according to a view through a front windscreen of vehicle 102 when the vehicle 102 approaches or enters parking place 104 or after the vehicle stands still at parking place 104. Image 400 may accordingly represent objects such as tree 106 and building 108 as introduced in Fig. 1 as belonging to the environment of parking lot 103. A processing of image 400 is described further below.

Generally, either one or both of input component 202 and frontend component 204 are understood to be operative for retrieving, receiving and/or otherwise accepting various input data required by the PV yield estimator 208. In the situation depicted in Fig. 1, the estimator 208 is to deliver a PV yield estimate for a prospective parking duration of vehicle 102 at parking place 104. For example, the frontend component 204 may provide to the estimator 208 input data representing information on a shape of vehicle 102, a performance of the solar integration 118 of vehicle 102, the localization of the vehicle, such as one or more of, for example, an indication of a geographical position of the vehicle 102 or the parking lot 103, an orientation of the vehicle 102, etc.

As a specific example, frontend 204 may access a weather database 212, which may be a remote database providing one or more of real-time weather data, short-term, mid-term and long-term forecast weather data applicable for the geographical location of vehicle 102 / parking lot 103. As a further example, data representing local real-time and/or forecast weather conditions at the location of the parking lot 103 may also be provided by parking lot 103 for download to vehicle 102. As another example, a part or portion of the solar integration 118 may serve as a light sensor and a current performance of the PV integration may be used for calculating the PV yield estimate for the prospective parking duration.

In step 306, PV yield estimator 208 operates to calculate a PV yield estimate taking into account various of the above-discussed input data, including imaging data such as that illustrated in Fig. 4A. Specifically, input component 202 and frontend 204 may forward the input data to PV yield estimator 208 to initiate operation thereof. When provided with the input data, the PV yield estimator 208 may return an estimated total PV yield for the entire prospected parking duration. Moreover, the estimator 208 may provide intermediate yield estimates for intermediate time points during the parking duration. As one example, data may be provided which represent an estimated PV yield as a function of time.

As an illustrative example, Fig. 4B is a time diagram illustrating along a time axis 422 a predicted or estimated charging, power or load status 424 of battery 210 of vehicle 102. The load status over time may be estimated by the PV yield estimator 208 based on, amongst others, the image illustrated in Fig. 4A.

Specifically, Figs. 4A and 4B cooperate to illustrate movement of the sun starting from position 110 at a time t0 when the vehicle 102 approaches parking place 104. Arrows 402-410 in Fig. 4A illustrate the continuing path of the sun during the prospective parking duration of vehicle 102 at parking place 104. It is readily understood that solar paths 402, 406, and 410 in Fig. 4A correspond to time spans where vehicle 102 is illuminated by the sun, while solar paths 404 and 408 correspond to time spans where vehicle 102 is shadowed, i.e., is in the shadow of either (or both) of objects 106 and 108. For ease of illustration, varying weather conditions such as clouds covering the sun, sundown, etc. are ignored in the scenario of Fig. 4A.

A load status of the vehicle 102 parking at parking place 104 may be calculated by estimator 208 as follows. At the beginning of the parking at time t0, a current load status of the battery may be low, but can be estimated to rapidly increase due to the PV integration 118 converting full sunlight into electrical energy and further to the vehicle 102 being connected to power grid 122 and being charged therefrom, and the charging from the grid and the PV integration may be operative to as soon as possible reach a minimum load status L_min, which should not be fallen short of. At a time point t1, a load condition of L_min may be reached and upon reaching said minimum load condition, a loading from grid 122 may be stopped, such that battery loading may continue using only the PV integration 118, which is in full sunlight when the sun moves along its path 402.

At a time t2, the vehicle 102, more specifically its PV integration 118 is predicted to become shaded by tree 104 and loading considerably slows down. As according to the prediction discussed here the required load status nevertheless can be reached during the prospective parking duration, loading from grid 122 is avoided although the vehicle 102 is in the shadow.

At a time t3, the sun continues to move forward along its path 406 and full sunlight impinges on PV integration 118, such that loading from the PV integration 118 is continued with an accordingly increased rate. Loading continues until at a time t4, a maximum intended load L_max is reached and loading is stopped. L_max may be determined to an energy demand L_target required for the vehicle for the driving away from parking lot 103 until another charging opportunity may be reached (taking into account charging from the PV integration 118). However, in the current example, L max is instead determined from conditions of optimum battery management. According to numbered examples, L target may be 60% while L max may be 80%.

Although full power level L_max is reached and the vehicle 102 is in full sun, at time t4 no power may supplied from PV integration 118 or battery 210 to consumers via grid 122, for example, because of relatively low tariffs at time t4.

At a time t5, when the sun enters path 408, the PV integration 118 becomes shaded by building 108. As the battery has already been loaded up to the required L_max and kept at that level previous to the shadow of building 108 reaching vehicle 102, no further action is required, except that at a time t6, electricity prices according to tariffs known to PV yield estimator 208 reach a profitable level, and therefore power control 206 now starts to supply power to grid 122 resp. consumers connected via grid 122, the load status of battery 210 therefore decreasing. The PV integration 118 cannot contribute to power provisioning to grid 122 or re-charging battery 210, as the vehicle 102 is still shadowed by building 108. Accordingly, the load status of the battery decreases, until at a time t7 the desired load level L target is reached, and supply of power to grid 122 is therefore stopped.

From a time t8 onwards the vehicle 102 is in sunlight again and until the prospective parking time t9 is reached, the PV integration 118 may convert sunlight into electrical energy which is then supplied to the grid 122 while the load status L target of vehicle 102 is kept constant.

It is recalled that the evolution of the battery load status as exemplarily depicted in Fig. 4B is an estimation or prediction calculated by the PV yield estimator 208 based on, amongst others, the image in Fig. 4A. An estimated power provisioning or power consumption management may be different when weather conditions are additionally taken into account. Risks which may result from the prediction relying on error sources such as errors in the weather forecast, errors in image processing, in particular object recognition and according shading properties, the factual parking duration deviating from the prospective parking duration, etc. may be accounted for by selecting appropriate values for Lmin, Lmax, for example. It can be contemplated that battery level or load can also be measured in or based on, for example, km [kilometers] indicating according travel distances for the vehicle.

Referring back to Fig. 3, in step 308 the power provisioning component 206 may operate according to the PV yield estimates of estimator 208, i.e., may accordingly control a charging and discharging of the battery 210 from PV integration 118 and/or grid 122, a feeding of power from battery 210 or PV integration 118 to grid 122, etc. Factual power provisioning may deviate from the prediction as according to the PV yield estimator 208, and management in step 308 may therefore comprise that data may be sensed, such as the factual parking duration in comparison to the prospective parking duration, real weather conditions in comparison to the forecast weather conditions, real shadowing conditions in comparison to predicted shadowing conditions, etc. to enable improved predictions and recommendations in future operation.

In step 310 the power control module 120 may return control to a main control of vehicle 102, for example when the vehicle 102 factually leaves the parking place 104.

Various approaches can be contemplated for the PV yield estimator calculating the local PV yield estimate based on local imaging data. Referring again to Fig. 4A, based on location data, geographical data, etc. the estimator may calculate the path 402-410 of the sun 110 during the parking duration. From analyzing the image 400, a local horizon line or horizon 412 as it appears from the perspective of the vehicle at its current location may be calculated. The horizon is to be interpreted as separating areas marked with "sky" conditions from areas marked as "ground" or "obstruction" conditions, such that the sun, when moving through areas marked as "sky", will shine on the vehicle (setting aside the influence of weather conditions, air pollution, etc. for sake of discussion), while when the sun moves through areas marked as "ground" or "obstruction", this means either night or shadow at the location of the vehicle. Other approaches of identifying from local imaging data shadowing times of a parked or otherwise unmoved vehicle can be contemplated.

While objects 106, 108 have exemplarily been discussed as shadowing the vehicle 102, it can be contemplated that objects can be identified from imaging data which when illuminated may reflect sunlight onto the vehicle such that a relevant amount of energy can be generated therefrom by the PV integration, such as reflective glass fronts, and this may also be implemented to be considered by the PV yield estimator. In other words, a horizon or an environment around the vehicle may not only determined in directions towards the path of the sun during the parking duration, but also in opposite directions.

Further it is important to note that any such predictions or estimates as illustrated in Fig. 4B for parking place 104 may be performed or repeated for further parking places of parking lot 103, and the predictions be compared with each other to optimize a yield of the vehicle's PV integration, minimize a charging required from the grid, optimize a power supplied to the grid, etc. Different shadowing conditions can be found from images made when approaching / entering the parking lot, a map of the lot indicating the positions of the different parking places, etc. Approximate predictions can also be sufficient, for example two images taken when the vehicle approaches the parking lot or particular parking places may allow determining distances to potential shadowing objects, such that parking places more distant to such objects can be recommended, etc. More precisely, determining positions of potential shadowing objects from images taken at different locations of the vehicle can contribute to more accurate predictions of whether potentially obscuring objects will factually obscure the sun during the prospective parking time.

Embodiments as described herein provide a method and module for power consumption / power provisioning in a vehicle where such module may operate stand-alone or integrated within existing power management and/or power control in vehicles. In particular for vehicles having PV integration, embodiments discussed herein consider the local environment of the vehicle such as those objects in particular being the source of local shading conditions when the vehicle is parked for a specified parking duration, and this enables optimizing a PV yield of the solar integration, minimizing energy to be supplied by (and to be bought from) a grid or supplier, and/or optimizing a power which can be supplied to others, and this may generally contribute to minimizing the running costs of the vehicle.

Regarding local shadowing conditions, in particular for longer parking durations of, e.g., more than one hour, it is to be noted that it is not normally an easy task for a driver to estimate purely by mind a PV yield for the vehicle during parking even when the parking place, a general performance of the vehicle's PV integration etc. is known. For a "long" parking duration where the sun cannot be considered to stand still, the direction of the light impinging onto the vehicle changes and so do shading conditions as resulting from various objects at various distances, with different sizes, appearances, etc., where also shadows may overlap at the position of the parked vehicle. Changing weather conditions further add to complexity of the prediction, where in particular for medium and long parking durations it is often difficult to know in advance the time spans when the sun is shining, which may depend on when clouds come and/or go, and it is therefore complex to know whether any shading of the parked vehicle by nearby objects is at all relevant due to the sun anyway being obscured by clouds, etc.

Embodiments described herein can considerably increase the accuracy of PV yield estimations. A PV yield estimator can predict an amount of solar energy which can be transformed into km, and can provide short, medium, and long term forecasts. Current and/or future (forecast) weather data can be accessed, and this can further increase the accuracy of the future PV yield estimation.

Additionally or alternatively, to increase the accuracy of the model, a horizon surrounding the vehicle can be integrated into the model in order to calculate the potential shadowing affecting the performance of the solar integration. The horizon could automatically be calculated using cameras present on the vehicle and the imaging data can be imported into the model integrated within, e.g., a car infotainment. Additionally or alternatively, a driver's smartphone camera can be used, and the image/s be imported through the smartphone of the driver.

The cameras provide an image or images from the environment. Additionally, information on an orientation of the vehicle (based on a compass function in the smartphone or the vehicle) and a position of the vehicle can be collected, and information regarding effects on the solar yield can be calculated. Weather forecast data can be accessed, and an according prediction on the solar yield be determined by, e.g., calculation, simulation and/or modelling.

Any such predictions can be used to optimize an injection of energy into a grid. For example, energy or power not required for the next drive can be fed, preferably at a time when the prices are high, if it is predictable that sufficient energy can be generated within a prospective parking duration. Charging and parking processes can generally be optimized; for example, it is not required to search or use a charging station if according to a prediction in a planned time span sufficient solar energy can be generated or harvested.

While the invention has been described in relation to its preferred embodiments, it is to be understood that this description is intended non-limiting and for illustrative purposes only. In particular, various combinations of features wherein the features have been described separately hereinbefore are apparent as advantageous or appropriate to the skilled artisan. Accordingly, it is intended that the invention be limited only by the scope of the claims appended hereto.

### LIST OF REFERENCE SIGNS

- 100: Parking situation
- 102: Vehicle
- 103: Parking Lot
- 104: Parking Place
- 106: Tree
- 108: Building
- 110: Sun
- 112: Shadow line
- 114: Shadow line
- 116: Solar path
- 118: PV integration
- 120: Power consumption control module
- 121: Connector
- 122: Power grid
- 124: Camera
- 202: Input component
- 204: Frontend component
- 206: Power provisioning component
- 208: PV yield estimator
- 210: Battery
- 300: Method
- 302-310: Method steps
- 400: Parking scenario
- 402-410: Solar path
- 412: Horizon line
- 420: Diagram
- 422: Time axis
- 424: Load axis

## Claims

1. A method for controlling power consumption for a vehicle having photovoltaics, PV, at a vehicle body, comprising:
accepting (304), from an imaging device (124), imaging data representing information on an environment of the vehicle (102);
calculating (306) a PV yield estimate taking into account the imaging data; and
controlling (308) a power consumption related to the vehicle (102) taking into account the calculated PV yield estimate.

2. The method according to claim 1,
wherein the imaging device comprises at least one of a camera of the vehicle and a camera (124) of a personal mobile device of a passenger of the vehicle (102).

3. The method according to claim 1 or 2, further comprising:
accepting a parking intention indication representing an information that the vehicle (102) is going to be parked, and
in response to accepting the parking intention indication, automatically initiating an imaging process in the imaging device to receive the imaging data.

4. The method according to any one of the preceding claims,
wherein calculating the PV yield estimate comprises calculating, based on the imaging data, an amount of light energy impinging on the vehicle (102) for a given parking duration.

5. The method according to claim 4,
wherein calculating the PV yield estimate comprises calculating, based on the imaging data, a shadowing of the vehicle (102).

6. The method according to claim 5,
wherein calculating the PV yield estimate comprises calculating, based on the imaging data, a horizon (412) surrounding the vehicle (102).

7. The method according to any one of the preceding claims, further comprising:
accepting weather data related to a location of the vehicle (102), and calculating the PV yield estimate based on said weather data.

8. The method according to any one of the preceding claims, further comprising:
accepting an energy requirement indication indicating a demand for energy of the vehicle (102) after a prospective park duration, wherein the power consumption related to the vehicle (102) is controlled based on the energy requirement indication.

9. The method according to any one of the preceding claims, further comprising:
providing a park position indication of at least one of various park positions based on PV yield estimates calculated for each of the various park positions.

10. A computer program comprising program code portions for at least one of performing and controlling the method of any one of the preceding claims when the computer program is executed on one or more computing devices.

11. A computer readable medium storing the computer program according to the preceding claim.

12. A power consumption control module (120) for a vehicle (102) having photovoltaics, PV (118), at a vehicle body, comprising:
a component (202) configured for accepting, from an imaging device (124), imaging data representing information on an environment of the vehicle (102),
a PV yield estimator (208) configured for calculating a PV yield estimate taking into account the imaging data, and
a component (206) configured for controlling a power consumption related to the vehicle (102) taking into account the calculated PV yield estimate.
